# EUROPÄISCHE PATENTANMELDUNG

(11) **EP 4 516 187 A1**
(43) Veröffentlichungstag der Anmeldung: **05.03.2025**
(21) Anmeldenummer: 24196323.0
(22) Anmeldetag: 23.08.2024
(51) Int. Cl.: A47L 9/28, H04B 3/54

(54) **STEUERN EINES REINIGUNGSSYSTEMS**

(30) Priorität: 31.08.2023 DE 102023208402
(71) Anmelder: BSH Hausgeräte GmbH, 81739 München (DE)
(72) Erfinder: Hassfurter, Stefan, 96126 Maroldsweisach (DE); Schnitzer, Frank, 97616 Bad Neustadt (DE)

(57) **Zusammenfassung**

Verfahren (300) zur Steuerung eines Reinigungssystems (100), das zwei Partner (105, 110) umfasst, von denen einer einen Bodenroboter (105) und der andere eine Basisstation (110) umfasst; wobei die Partner (105, 110) mittels zweier elektrischer Kontakte (115) miteinander verbunden sind; wobei das Verfahren (300) folgende Schritte umfasst: Steuern eines Gleichstroms über die Kontakte (115) zu einem Energiespeicher (120) des Bodenroboters (105); Anfragen einer Kommunikation durch vorübergehendes Absenken des Gleichstroms durch den ersten Partner (105, 110); Best6tigen der Kommunikation durch vorübergehendes Absenken des Gleichstroms durch den zweiten Partner (105, 110); und Anfordern einer Funktion des zweiten Partners (105, 110) durch Modulieren des Gleichstroms nach einem vorbestimmten Muster durch den ersten Partner (105, 110).

## Beschreibung

Die vorliegende Erfindung betrifft das Steuern eines Systems mit einem Bodenroboter und einer Basisstation. Insbesondere betrifft die Erfindung die Kommunikation zwischen einem Bodenroboter und einer Basisstation.

Ein Bodenroboter kann an einer Basisstation andocken, wobei elektrische Kontakte zwischen den Geräten geschlossen werden. Die Basisstation kann eine vorbestimmte Spannung an den Kontakten bereitstellen, sodass über die Kontakte ein Ladestrom durch einen elektrischen Energiespeicher des Bodenroboters fließen kann. Zur Steuerung einer Funktion der Basisstation durch den Bodenroboter kann eine zusätzliche Datenschnittstelle vorgesehen sein, beispielsweise auf der Basis einer Übertragungsstrecke von infrarotem Licht.

Es wurde vorgeschlagen, eine solche zusätzliche Übertragungsstrecke einzusparen und dem Ladestrom ein Datensignal zu überlagern.

DE 10 2010 000 607 B4 betrifft eine Überlagerung eines hochfrequenten Datensignals über eine elektrische Verbindung zum Aufladen eines Energiespeichers. Eine ähnliche Technik ist in DE 10 2004 041 021 B3 ausgeführt. CN 113 786 140 A betrifft eine Kommunikation zwischen einer Basisstation und einer Reinigungsmaschine. Durch Variieren eines Ladestroms zwischen zwei vorbestimmten Werten kann eine Information von der Basisstation an den Bodenroboter übertragen werden.

Bekannte Kommunikationstechniken in diesem Bereich arbeiten üblicherweise einseitig, wobei nur eine der Seiten eine Information an die andere Seite übertragen kann. Außerdem erfordern die meisten bestehenden Vorschläge aufwändige Schaltungen, um dem Ladestrom auf der einen Seite ein hochfrequentes Signal zu überlagern und auf der anderen Seite das Signal aus dem Ladestrom auszukoppeln. Ein System, das einen Bodenroboter und eine Basisstation umfasst, kann dadurch unnötig komplex und damit kostenintensiv sein.

Eine der vorliegenden Erfindung zu Grunde liegende Aufgabe besteht in der Bereitstellung einer verbesserten Technik zur Kommunikation zwischen einem Bodenroboter und einer Basisstation. Die Erfindung löst diese Aufgabe mittels der Gegenstände der unabhängigen Ansprüche. Unteransprüche geben bevorzugte Ausführungsformen wieder.

Ein Reinigungssystem umfasst zwei Partner, von denen einer einen Bodenroboter und der andere eine Basisstation umfasst; wobei die Partner mittels zweier elektrischer Kontakte miteinander verbunden sind. Ein Verfahren zur Steuerung eines solchen Reinigungssystems umfasst Schritte des Steuerns eines Gleichstroms über die Kontakte zu einem Energiespeicher des Bodenroboters; des Anfragens einer Kommunikation durch vorübergehendes Absenken des Gleichstroms durch den ersten Partner; des Bestätigens der Kommunikation durch vorübergehendes Absenken des Gleichstroms durch den zweiten Partner; und des Anforderns einer Funktion des zweiten Partners durch Modulieren des Gleichstroms nach einem vorbestimmten Muster durch den ersten Partner. Bevorzugt wird die angeforderte Funktion dann durch den zweiten Partner gesteuert.

Der Gleichstrom ist üblicherweise ein Ladestrom, um den elektrischen Energiespeicher aufzuladen, sodass elektrische Energie von der Basisstation an den Bodenroboter transferiert wird. In einer Ausführungsform kann der Ladestrom auch negativ sein, beispielsweise wenn der Energiespeicher gezielt entladen werden soll.

Das Verfahren kann es erlauben, eine Kommunikation zwischen dem Bodenroboter und der Basisstation durchzuführen, ohne eine dedizierte Datenschnittstelle, beispielsweise auf der Basis einer Infrarot-Strecke, zu erfordern. Durch das Voranstellen der Anfrage und der Bestätigung vor die eigentliche Kommunikation kann das System verbessert gesteuert werden. Insbesondere kann eine Richtung, in der die Kommunikation erfolgen soll, vorab festgelegt werden.

Es ist bevorzugt, dass jeder der Partner eine Kommunikation mit dem anderen Partner anfragen kann. Weiter bevorzugt kann jeder der Partner eine Funktion des jeweils anderen Partners anfordern. So kann eine bidirektionale Kommunikation im Wechselbetrieb (Halbduplex) gesteuert werden. Eine Übertragungsgeschwindigkeit kann im Bereich von nur wenigen bit/s liegen, was für eine Funktion, die zwischen dem Bodenroboter und der Basisstation erfolgt bzw. für eine Funktionen, die zwischen den Partnern gesteuert werden kann, ausreichen kann. Durch die niedrige Datenrate kann eine Datensicherheit sehr hoch sein.

Bevorzugt ist eine Vielzahl Funktionen des zweiten Partners vorbestimmt, wobei jeder der Funktionen ein eindeutiges Muster zugeordnet ist. Unabhängig davon, ob der erste Partner den Bodenroboter und der zweite die Basisstation umfasst oder umgekehrt, kann aus einem vorbestimmten Repertoire unterschiedlicher Funktionen gewählt werden.

Weiter bevorzugt fordert der erste Partner keine Funktion an, falls die Bestätigung länger als eine vorbestimmte Zeit ausbleibt. Das Reinigungssystem kann unterschiedlich ausgebaute Bodenroboter und/oder unterschiedlich ausgebaute Basisstationen umfassen. Sollte der zweite Partner weniger gut als der erste Partner ausgebaut sein, so wird er auf dessen Anfrage nicht reagieren. Eine Funktion des zweiten Partners kann dann zwar nicht gesteuert werden, das Aufladen des Energiespeichers des Bodenroboters kann dadurch jedoch nicht beeinträchtigt sein. So kann beispielsweise ein Bodenroboter mit einer Ladestation kombiniert werden, die keine Kommunikation und keine Funktion unterstützt, oder mit einer Servicestation, die Kommunikation bzw. Funktionen unterstützt. In umgekehrter Richtung kann die Basisstation mit einem einfachen Bodenroboter kombiniert werden, der keine Kommunikation und keine Funktionen unterstützt, oder mit einem komplexeren Bodenroboter, der die Kommunikation und wenigstens eine Funktion unterstützt.

Eine Absenkung kann auf einen vorbestimmten Bruchteil des zuvor gesteuerten Gleichstroms gesteuert werden. Beispielsweise kann die Absenkung auf ca. 60 % oder ca. 30 % des ursprünglichen Ladestroms erfolgen. Der Bruchteil kann frei gewählt werden, um eine sichere und rasche Signalisierung zu ermöglichen.

In einer Ausführungsform umfassen die Anfrage, die Bestätigung und/oder die Anforderung eine vorbestimmte Sequenz von vorübergehenden oder aneinander anschließenden Absenkungen. Die Sequenz kann zwei oder mehr Absenkungen umfassen. Zwischen den einzelnen Absenkungen kann zum ursprünglichen Ladestrom zurückgekehrt werden. Auf diese Weise kann eine Art Impulstelegramm vom ersten zum zweiten Partner übermittelt werden, um eine Anfrage bzw. eine Anforderung zu übermitteln bzw. vom zweiten zum ersten Partner, um eine Anfrage zu bestätigen. Je mehr Absenkungen die Sequenz umfasst, desto sicherer kann die Anfrage, die Anforderung oder die Bestätigung signalisiert werden. Allerdings ist bevorzugt, dass unter ca. zehn, bevorzugt unter ca. acht; weiter bevorzugt unter ca. vier Absenkungen in einer Sequenz enthalten sind. Die Sequenz kann relativ langsam gesteuert werden und dauert in einer Ausführungsform beispielsweise ca. eine Sekunde.

Eine Anfrage, eine Anforderung und/oder eine Bestätigung können Absenkungen unterschiedlicher Beträge und/oder Dauern umfassen. Eine Anzahl unterschiedlicher Beträge bzw. Dauern kann beliebig gewählt sein, sodass mittels einer einzigen Absenkung Informationen übertragen werden, die mehrere Bit umfassen. Sind beispielsweise acht verschieden starke Absenkungen definiert und vier verschieden lange Dauern, so bestehen für eine einzige Absenkung bereits 32 verschiedene Möglichkeiten, was 5 Bit entspricht. Bevorzugt umfasst die Sequenz wenigstens zwei unterschiedlich starke Absenkungen. Zusammen mit dem ursprünglichen Ladestrom können dann wenigstens drei unterschiedliche Ströme zwischen den Partnern fließen, sodass eine Störfestigkeit erhöht sein kann.

Die Anfrage und die Bestätigung können mittels unterschiedlicher Absenkungen signalisiert werden. So kann verhindert werden, dass eine Anfrage des ersten Partners, die der zweite Partner nicht korrekt auswerten kann, unbeabsichtigt bestätigt wird, indem der zweite Partner eine Anfrage an den ersten schickt.

Der erste Partner kann den Bodenroboter umfassen, wobei die Anforderung eine der folgenden Funktionen betrifft: Entleeren eines Staubbehälters, Reinigen eines Wischelements und Auffüllen eines Flüssigkeitsbehälters. Andere oder weitere Funktionen des Bodenroboters können ebenfalls vorgesehen sein.

Der erste Partner kann die Basisstation umfassen, wobei die Anforderung insbesondere eine Weiterleitung einer Nachricht an eine externe Stelle umfassten kann. Die externe Stelle kann beispielsweise ein Mobiltelefon eines Benutzers des Reinigungssystems betreffen. So kann auf eine dedizierte Kommunikationsschnittstelle zwischen der Basisstation und der externen Stelle verzichtet werden. Eine solche Schnittstelle ist klassischerweise drahtlos ausgeführt und verwendet beispielsweise Bluetooth, WLAN oder Mobilfunk. Mit der Schnittstelle verbundene Kosten können entfallen.

Die Nachricht kann eine Anforderung einer der folgenden Funktionen betreffen: Füllen oder Leeren eines Flüssigkeitsbehälters, Wechseln eines Staubbeutels oder Signalisieren eines Fehlers.

Nach einem weiteren Aspekt der vorliegenden Erfindung umfasst ein Bodenroboter einen elektrischen Energiespeicher; zwei elektrische Kontakte zur Verbindung mit einer Basisstation; eine Einrichtung zur Bestimmung eines durch die Kontakte fließenden elektrischen Stroms; eine Einrichtung zur Steuerung des durch die Kontakte in den elektrischen Energiespeicher fließenden Stroms; und eine Verarbeitungseinrichtung.

In einer ersten Ausführungsform ist die Verarbeitungseinrichtung dazu eingerichtet, eine Kommunikation mit der Basisstation mittels vorübergehendem Absenken eines über die Kontakte fließenden Stroms anzufragen; eine Bestätigung der Kommunikation auf der Basis einer vorübergehenden Absenkung des über die Kontakte fließenden Stroms zu erfassen; und eine vorbestimmte Funktion der Basisstation mittels Modulieren des Gleichstroms nach einem zugeordneten Muster anzufordern.

Nach einer zweiten Variante ist die Verarbeitungseinrichtung dazu eingerichtet, eine Anfrage zur Kommunikation auf der Basis eines vorübergehenden Absenkens eines über die Kontakte fließenden Stroms zu erfassen; die Kommunikation mittels vorübergehendem Absenken des über die Kontakte fließenden Stroms zu bestätigen; eine Anforderung für eine vorbestimmte Funktion auf der Basis einer Modulation des über die Kontakte fließenden Gleichstroms nach einem vorbestimmten Muster zu erkennen; und die vorbestimmte Funktion zu steuern.

Der Bodenroboter ist bevorzugt dazu eingerichtet, eine Bodenfläche in einem Haushalt zu reinigen. Dazu kann der Bodenroboter ein Gebläse mit einem Saugmund umfassen, der über die Bodenfläche geführt wird. Optional kann der Bodenroboter eine Wischvorrichtung umfassen, die dazu eingerichtet ist, die Bodenfläche feucht zu reinigen. Außerdem kann eine Bürste oder ein Besen vorgesehen sein, um losen Schmutz von der Bodenfläche abzulösen bzw. einzusammeln. Der Bodenroboter arbeitet weiter bevorzugt autonom und ist dazu eingerichtet, einen vorbestimmten Abschnitt einer Bodenfläche selbsttätig abzufahren, um sie zu bearbeiten. Ist die Bearbeitung abgeschlossen, mangelt es an einem Betriebsmittel oder ist ein Speicher zu füllen oder zu entleeren, so kann der Bodenroboter selbsttätig zu einer Basisstation fahren und an diese andocken, sodass elektrische Kontakte mit korrespondierenden Kontakten der Basisstation verbunden werden. Über die Kontakte kann elektrische Energie von der Basisstation übernommen werden.

Bevorzugt sind genau zwei Kontakte vorgesehen, an denen die Basisstation eine vorbestimmte Spannung bereitstellen kann. Ein elektrischer Strom kann durch einen der Kontakte in den Bodenroboter und durch den anderen Kontakt zurück zur Basisstation fließen. Im Bodenroboter ist bevorzugt, dass zumindest ein Teil des Stroms durch den Energiespeicher fließt. Der Stromfluss kann seitens des Bodenroboters auch unterbrochen werden.

Nach einem weiteren Aspekt der vorliegenden Erfindung umfasst eine Basisstation eine elektrische Stromquelle, zwei elektrische Kontakte zur Verbindung mit einem Bodenroboter; eine Einrichtung zur Bestimmung eines über die Kontakte fließenden elektrischen Stroms; eine Einrichtung zur Steuerung des aus der Stromquelle in die Kontakte fließenden Stroms; und eine Verarbeitungseinrichtung.

In einer ersten Variante ist die Verarbeitungseinrichtung dazu eingerichtet, eine Kommunikation mit dem Bodenroboter mittels vorübergehendem Absenken eines über die Kontakte fließenden Stroms anzufragen; eine Bestätigung der Kommunikation auf der Basis einer vorübergehenden Absenkung des über die Kontakte fließenden Stroms zu erfassen; und eine vorbestimmte Funktion des Bodenroboters mittels Modulieren des Gleichstroms nach einem zugeordneten Muster anzufordern.

In einer zweiten Variante ist die Verarbeitungseinrichtung dazu eingerichtet, eine Anfrage zur Kommunikation auf der Basis eines vorübergehenden Absenkens eines über die Kontakte fließenden Stroms zu erfassen, die Kommunikation mittels vorübergehendem Absenken des über die Kontakte fließenden Stroms zu bestätigen; eine Anforderung für eine vorbestimmte Funktion auf der Basis einer Modulation des über die Kontakte fließenden Gleichstroms nach einem vorbestimmten Muster zu erkennen; und die vorbestimmte Funktion zu steuern.

Nach wieder einem weiteren Aspekt der vorliegenden Erfindung umfasst ein Reinigungssystem einen hierin beschriebenen Bodenroboter sowie eine hierin beschriebene Basisstation.

Ein hierin beschriebenes Verfahren kann mittels eines solchen Reinigungssystems ausgeführt werden. Dazu können der Bodenroboter und/oder die Basisstation eine Verarbeitungseinrichtung umfassen, die elektronisch ausgeführt ist und insbesondere einen programmierbaren Mikrocomputer oder Mikrocontroller umfasst. Das Verfahren kann auf einem oder beiden Partnern des Reinigungssystems ablaufen. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile können zwischen dem Bodenroboter, der Basisstation, dem Reinigungssystem und dem Verfahren übertragen werden und umgekehrt.

Die Erfindung wird nun unter Bezug auf die beiliegenden Figuren genauer beschrieben, in denen:
- Figur 1: eine schematische Darstellung eines Reinigungssystems;
- Figur 2: eine Darstellung eines beispielhaften Reinigungssystems; und
- Figur 3: ein Ablaufdiagramm eines beispielhaften Verfahrens
darstellen.

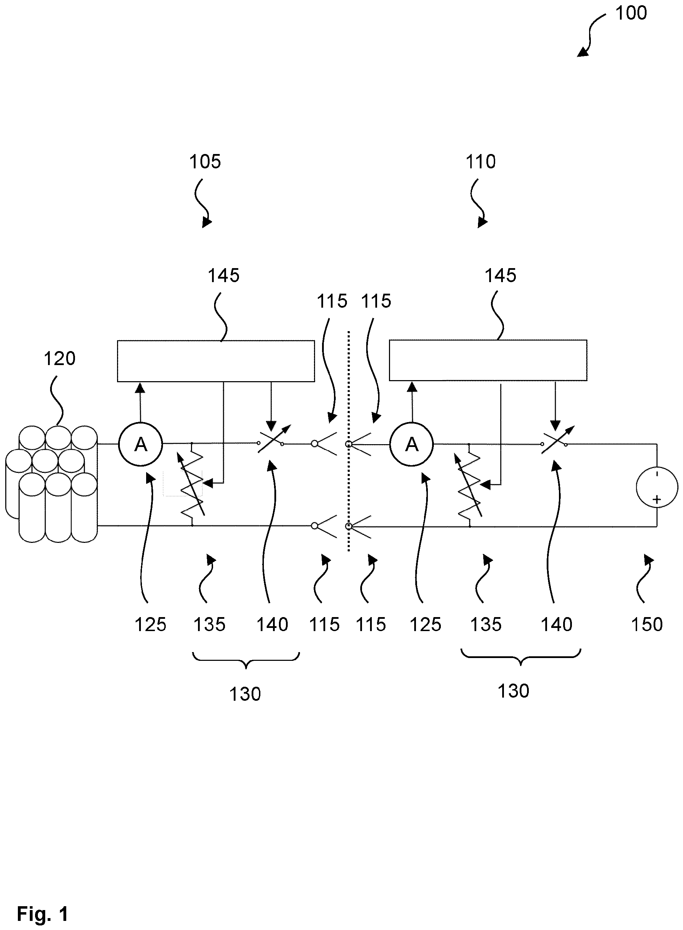

Figur 1 zeigt eine schematische Darstellung eines Reinigungssystems 100. Das Reinigungssystem 100 umfasst einen Bodenroboter 105 und eine Basisstation 110. Besonders bevorzugt kann das Reinigungssystem 100 mittels unterschiedlicher Bodenroboter 105 und/oder unterschiedlicher Basisstationen 110 aufgebaut sein. Die beiden Partner 105, 110 des Reinigungssystems 100 sind bevorzugt dazu eingerichtet, sich an Fähigkeiten des jeweils anderen Partners 105, 110 entsprechend anzupassen.

Zwischen dem Bodenroboter 105 und der Basisstation 110 sind zwei elektrische Kontakte 115 vorgesehen. Der Bodenroboter 105 umfasst einen elektrischen Energiespeicher 120, der üblicherweise in Form eines Akkumulators ausgeführt ist. Ein Stromsensor 125 ist dazu eingerichtet, einen elektrischen Strom zu bestimmen, der über die Kontakte 115 zu dem elektrischen Energiespeicher 120 fließt. Bevorzugt umfasst der Stromsensor 125 einen Längswiderstand (Shunt), sodass eine an ihm abfallende elektrische Spannung proportional zu einem durch ihn fließenden elektrischen Strom ist. In diesem Fall kann der Stromsensor 125 einen Spannungssensor umfassen. Andere Bauarten eines Stromsensors 125, beispielsweise induktiv oder thermisch, sind ebenfalls möglich.

Der elektrische Energiespeicher 120 kann elektrisch im Wesentlichen parallel zu den Kontakten 115 angeschlossen sein. Eine elektrische Spannung, die an den Kontakten 115 anliegt, kann dann auch am Energiespeicher 120 anliegen und ein elektrischer Strom, der über bzw. durch die Kontakte 115 fließt, kann auch durch den Energiespeicher 120 fließen. Um den fließenden Strom zu beeinflussen, kann eine Einrichtung 130 vorgesehen sein. In der Darstellung von Figur 1 sind zwei unterschiedliche solche Einrichtungen 130 vorgesehen. Eine erste solche Einrichtung 130 ist durch einen variablen Widerstand 135 gebildet, der parallel zum elektrischen Energiespeicher 120 geschaltet ist. Eine zweite Einrichtung 130 ist durch einen Schalter 140 gebildet, der zwischen einem der Kontakte 115 und dem Energiespeicher 120 eingeschleift ist. Eine Einrichtung 130 kann den fließenden elektrischen Strom oder eine an den Kontakten 115 anliegende Spannung steuern. Sollte die Basisstation einen der Parameter konstant halten, beispielsweise die an den Kontakten 115 anliegende Spannung, so kann durch Steuern des anderen Parameters, hier also des fließenden Stroms, eine zwischen den Partnern 105, 110 ausgetauschte elektrische Leistung verändert werden. Eine Verarbeitungseinrichtung 145 ist dazu eingerichtet, die Einrichtungen 130 in Abhängigkeit eines mittels des Sensors 125 bestimmten elektrischen Stroms zu steuern.

Um den über die Kontakte 115 durch den Bodenroboter 105 bezogenen Ladestrom zu maximieren, kann der variable Widerstand 135 auf einen minimalen Wert gesteuert werden. Dabei fließt ein Teil des Ladestroms über die Kontakte 115 durch den Energiespeicher 120 und ein anderer durch den Widerstand 135. Dementsprechend kann am Stromsensor 125 eine Zunahme des fließenden elektrischen Stroms bestimmt werden.

Der Widerstand 135 kann dazu eingerichtet sein, einen von mehreren vorbestimmten Widerstandswerten aufzuweisen oder kontinuierlich zwischen einem Minimalwert und einem Maximalwert gesteuert zu werden. Es ist bevorzugt, dass der Widerstand 135 einen vorbestimmten Mindestwert aufweist, sodass der durch ihn fließende elektrische Strom nicht übermäßig groß ist.

Die Basisstation 110 kann nur den über die Kontakte 115 fließenden Strom bestimmen; welcher Anteil davon durch den Energiespeicher 120 und welcher durch den variablen Widerstand 135 fließt ist ihr unbekannt. In einer alternativen Ausführungsform kann der variable Widerstand 135 statt parallel auch in Serie zum Energiespeicher 120 liegen. In diesem Fall würde zum Maximieren des über die Kontakte 115 fließenden Ladestroms ein minimaler Widerstandswert angesteuert werden.

Der über die Kontakte 115 fließende elektrische Strom kann auch durch den Schalter 140 beeinflusst werden. Ist der Schalter 140 geschlossen, so durchfließt der elektrische Strom über die Kontakte 115 auch den Energiespeicher 120. Wird der Schalter 140 geöffnet, so fließt kein Strom über die Kontakte 115.

Es ist zu beachten, dass auch andere Einrichtungen 130 zur Beeinflussung des über die Kontakte 115 und dem Energiespeicher 120 fließenden elektrischen Stroms vorstellbar sind. Außerdem kann eine Lage einer solchen Einrichtung 130 zwischen einem Kontakt 115 und dem Energiespeicher 120 variiert werden.

In Bezug auf eine hierin vorgestellte Kommunikationstechnik ist die Basisstation 110 teilweise korrespondierend zum Bodenroboter 105 aufgebaut, sodass dieselben Bezugszeichen für dieselben Elemente verwendet werden können. So umfasst die Basisstation 110 einen Stromsensor 125, wenigstens eine Einrichtung 130 zur Beeinflussung des über die Kontakte 115 fließenden elektrischen Stroms und eine Verarbeitungseinrichtung 145. Beispielhaft sind ein variabler Widerstand 135 und ein Schalter 140 als Einrichtungen 130 eingezeichnet. Im Unterschied zum Bodenroboter 105 umfasst die Basisstation 110 jedoch keinen Energiespeicher 120, sondern eine Stromquelle 150. Elektrischer Strom, der durch den Energiespeicher 120 fließt, wird mittels der Kontakte 115 von der Stromquelle 150 der Basisstation 110 an den Bodenroboter 105 bereitgestellt.

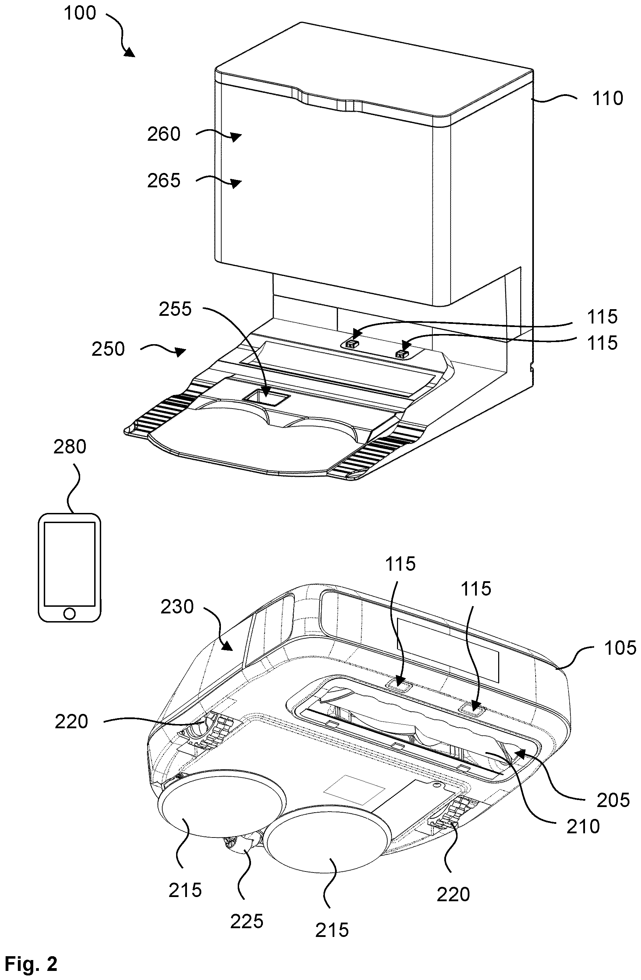

Figur 2 zeigt eine Darstellung eines beispielhaften Reinigungssystems 100. Im oberen Bereich ist eine beispielhafte Basisstation 110 und im unteren Bereich ein beispielhafter Bodenroboter 105 dargestellt.

Der Bodenroboter 105 umfasst beispielhaft einen Saugmund 205, durch den mittels eines nicht sichtbaren Gebläses ein Luftstrom bewirkt werden kann, eine optionale Borstenwalze 210 im Bereich des Saugmunds 205 sowie optional wenigstens eine Wischvorrichtung 215. Eine Bodenfläche, auf welcher der Bodenroboter 105 fährt, kann mittels der Einrichtungen 205 bis 215 bearbeitet und gereinigt werden. Zur Bewegung des Bodenroboters 105 sind beispielhaft zwei Antriebsräder 220 und ein Spornrad 225 vorgesehen. Im vorderen Bereich sind zwei Kontakte 115 zu erkennen. Weitere, in Figur 1 dargestellte Komponenten sind in Figur 2 nicht sichtbar. Eine optionale Kommunikationseinrichtung 230 ist dazu eingerichtet, mit einer externen Stelle zu kommunizieren. Die Kommunikationseinrichtung 230 arbeitet bevorzugt per Bluetooth (IEEE 802.15) oder WLAN (IEEE 802.11).

Die Basisstation 110 umfasst in der dargestellten Ausführungsform einen Andockbereich 250, der eine Art Rampe umfasst, auf die der Bodenroboter 105 auffahren kann, sodass seine Kontakte 115 an Kontakten 115 der Basisstation 110 anliegen. Der Bodenroboter 105 befindet sich dann in einer definierten Position gegenüber der Basisstation 110. Durch eine optionale Öffnung 255 kann beispielsweise ein Schmutzbehälter des Bodenroboters 105 entleert werden. In entsprechender Weise kann ein Flüssigkeitsbehälter gefüllt oder entleert werden. Eine Wischvorrichtung 215 kann mittels einer entsprechenden Vorrichtung gereinigt werden.

In einem oberen Bereich kann die Basisstation 110 einen oder mehrere Tanks 260 oder Behälter 265 aufweisen, in denen Betriebsstoffe für den Bodenroboter 105 vorrätig gehalten werden können bzw. in die zu entsorgendes Material vom Bodenroboter 105 übernommen werden kann. Weitere, in Figur 1 dargestellte Komponenten sind in der Darstellung von Figur 2 nicht sichtbar.

Optional kann das Reinigungssystem 100 darüber hinaus eine externe Stelle 280 umfassen, die in der Darstellung von Figur 2 beispielhaft als Mobiltelefon dargestellt ist.

Die externe Stelle 280 ist dazu eingerichtet, eine Nachricht von einem der Partner 105, 110 des Reinigungssystems 100 entgegenzunehmen. Beispielsweise kann der Bodenroboter 105 eine Nachricht direkt mittels seiner Kommunikationseinrichtung 230 übermitteln. Eine indirekte Nachrichtenübermittlung ist ebenfalls möglich, beispielsweise indem die Basisstation 110 mittels eines hierin beschriebenen Kommunikationsverfahrens eine Nachricht an den Bodenroboter 105 übermittelt und dieser die Nachricht mittels der Kommunikationseinrichtung 230 an die externe Stelle 280 weiterleitet. Es ist zu beachten, dass in einer anderen Ausführungsform beide Partner 105, 110 über eine Kommunikationseinrichtung 230 verfügen können oder eine Kommunikationseinrichtung 230 nur seitens der Basisstation 110 vorgesehen ist.

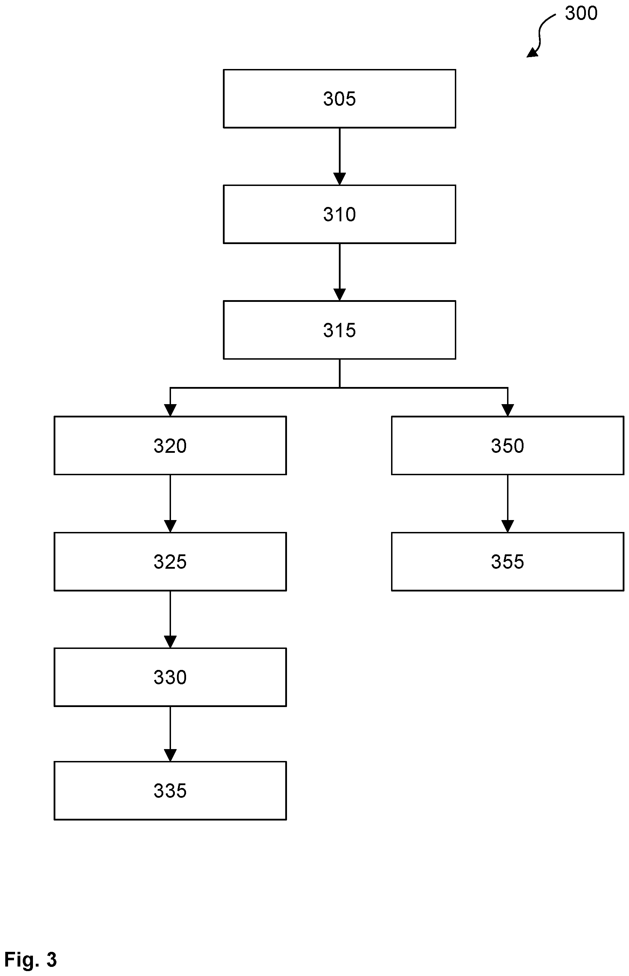

Figur 3 zeigt ein Ablaufdiagramm eines beispielhaften Verfahrens 300. In einem Schritt 305 kann ein Bodenroboter 105 an einer Basisstation 110 andocken. Kontakte 115 zwischen dem Bodenroboter 105 und der Basisstation 110 können dabei paarweise geschlossen werden.

In einem Schritt 310 kann ein Ladestrom, der von der Stromquelle 150 der Basisstation 110 über die Kontakte 115 zum Energiespeicher 120 des Bodenroboters 105 fließt, gesteuert werden.

Das Reinigungssystem 100 umfasst zwei Partner 105, 110, von denen beispielhaft ein erster Partner als Bodenroboter 105 und ein zweiter Partner als Basisstation 110 angenommen wird. Eine umgekehrte Zuordnung wäre ebenfalls möglich.

In einem Schritt 315 kann der erste Partner 105 eine Anfrage an den zweiten Partner 110 übermitteln, ob dieser zur Kommunikation mit ihm bereit ist. Dazu kann der erste Partner 105 den über die Kontakte 115 fließenden Strom vorübergehend absenken. Das Absenken kann eine vorbestimmte Sequenz mehrerer einzelner Absenkungen umfassen, wobei jede Absenkung eine vorbestimmte Dauer aufweisen kann. Beispielsweise kann mittels des Schalters 140 der Ladestrom für ca. 500 ms unterbrochen werden, dann für ca. 500 ms wiederhergestellt werden, erneut für ca. 500 ms unterbrochen und danach erneut zurückgesetzt werden. In einem anderen Beispiel kann mittels des variablen Widerstands 135 der fließende Strom für ca. 1000 ms auf ca. 60 % reduziert werden, dann für weitere ca. 1000 ms auf ca. 30 % reduziert werden und danach wieder auf 100 % zurückgesetzt werden. Andere Sequenzen sind ebenfalls denkbar. Die vorbestimmte Sequenz ist beiden Partnern 105, 110 bekannt, sodass eine zugeordnete Nachricht eindeutig ist.

In einem Schritt 320 kann der zweite Partner 110 die Anfrage bestätigen. Dazu kann der zweite Partner 110 den über die Kontakte 115 fließenden Strom vorübergehend absenken. Auch hier kann eine vorbestimmte Sequenz von Absenkungen gesteuert werden. Bevorzugt sind die Sequenzen für die Anfrage und die Absenkung unterschiedlich, sodass keine Missverständnisse entstehen. Sequenzen sind bevorzugt so bestimmt, dass ein Ende einer Sequenz durch einen empfangenden Partner 105. 110 eindeutig bestimmt werden kann.

In einem Schritt 325 erkennt der erste Partner 105, dass der zweite Partner 110 in der Lage ist, mit ihm zu kommunizieren. Nun kann der erste Partner 105 eine Anforderung zur Ausführung einer vorbestimmten Funktion an den zweiten Partner 110 übermitteln. Dazu kann der erste Partner 105 den über die Kontakte 115 fließenden elektrischen Strom modulieren, um die Anforderung an den zweiten Partner 110 zu übermitteln. Dazu kann eine ähnliche Vorgehensweise mit vorübergehenden Absenkungen wie hierin beschrieben ist verwendet werden. Die Anforderung umfasst üblicherweise mehr Information als die Anfrage oder die Bestätigung, sodass die Übermittlung mehr Zeit in Anspruch nimmt, eine andere Modulation verwendet oder mit höherer Geschwindigkeit abgewickelt wird. Die Modulation kann ein vorbestimmtes Muster umfassen, welches die Information codiert.

In einem Schritt 330 kann der zweite Partner 110 das Muster erkennen. Beispielsweise mittels einer Nachschlagetabelle (Lookup Table) kann er nun bestimmen, welche Funktion dem Muster zugeordnet ist. In einem Schritt 335 kann der zweite Partner 110 die angeforderte Funktion steuern. Der zweite Partner 110 kann den Erhalt der Anforderung auch erneut mit einer Bestätigungsantwort quittieren und erst dann mit der Ausführung der angefragten Funktion beginnen.

Sollte der zweite Partner 110 nicht in der Lage sein, mit dem ersten Partner 105 zu kommunizieren, so kann, folgend auf den Schritt 315, der erste Partner 105 in einem Schritt 350 bestimmen, dass der zweite Partner 110 nicht reagiert. In einem Schritt 355 kann der erste Partner 105 daraufhin seine Anfrage beenden. Eine Anforderung kann in diesem Fall nicht übermittelt werden.

### Bezugszeichen

- 100: Reinigungssystem
- 105: Bodenroboter
- 110: Basisstation

- 115: Kontakt

- 120: elektrischer Energiespeicher
- 125: Stromsensor
- 130: Einrichtung zur Beeinflussung des fließenden elektrischen Stroms
- 135: variabler Widerstand
- 140: Schalter
- 145: Verarbeitungseinrichtung
- 150: Stromquelle

- 205: Saugmund
- 210: Borstenwalze
- 215: Wischvorrichtung
- 220: Antriebsrad
- 225: Spornrad
- 230: Kommunikationseinrichtung

- 250: Andockbereich
- 255: Öffnung
- 260: Tank
- 265: Behälter

- 280: externe Stelle

- 300: Verfahren
- 305: Andocken Bodenroboter an Basisstation
- 310: Ladestrom steuern
- 315: Anfrage: erster Partner senkt Strom vorübergehend ab
- 320: Bestätigung: zweiter Partner senkt Strom vorübergehend ab
- 325: Anforderung: erster Partner moduliert Strom
- 330: zweiter Partner erkennt Muster
- 335: zweiter Partner steuert Funktion

- 350: zweiter Partner reagiert nicht
- 355: erster Partner beendet Anfrage

## Patentansprüche

1. Verfahren (300) zur Steuerung eines Reinigungssystems (100), das zwei Partner (105, 110) umfasst, von denen einer einen Bodenroboter (105) und der andere eine Basisstation (110) umfasst; wobei die Partner (105, 110) mittels zweier elektrischer Kontakte (115) miteinander verbunden sind; wobei das Verfahren (300) folgende Schritte umfasst:
- Steuern (310) eines Gleichstroms über die Kontakte (115) zu einem Energiespeicher (120) des Bodenroboters (105);
- Anfragen (315) einer Kommunikation durch vorübergehendes Absenken des Gleichstroms durch den ersten Partner (105, 110);
- Bestätigen (320) der Kommunikation durch vorübergehendes Absenken des Gleichstroms durch den zweiten Partner (105, 110); und
- Anfordern (325) einer Funktion des zweiten Partners (105, 110) durch Modulieren des Gleichstroms nach einem vorbestimmten Muster durch den ersten Partner (105, 110).

2. Verfahren (300) nach Anspruch 1 wobei jeder der Partner (105, 110) eine Kommunikation mit dem anderen Partner (105, 110) anfragen (315) kann.

3. Verfahren (300) nach Anspruch 1 oder 2, wobei eine Vielzahl Funktionen des zweiten Partners (105, 110) vorbestimmt ist; und jeder der Funktionen ein eindeutiges Muster zugeordnet ist.

4. Verfahren (300) nach einem der vorangehenden Ansprüche, wobei der erste Partner (105, 110) keine Anforderung steuert (355), falls die Bestätigung (320) länger als eine vorbestimmte Zeit ausbleibt.

5. Verfahren (300) nach einem der vorangehenden Ansprüche, wobei eine Absenkung (315, 320, 325) auf einen vorbestimmten Bruchteil des zuvor gesteuerten Gleichstroms gesteuert wird.

6. Verfahren (300) nach einem der vorangehenden Ansprüche, wobei die Anfrage (315), die Bestätigung (320) und/oder die Anforderung (325) eine vorbestimmte Sequenz von Absenkungen umfasst.

7. Verfahren (300) nach Anspruch 6, wobei eine Anfrage (315), eine Anforderung (325) und/oder eine Bestätigung (320) eine Sequenz von vorübergehenden oder aneinander anschließenden Absenkungen umfassen.

8. Verfahren (300) nach Anspruch 7, wobei die Sequenz wenigstens zwei unterschiedlich starke Absenkungen umfasst.

9. Verfahren (300) nach einem der vorangehenden Ansprüche, wobei die Anfrage (315) und die Bestätigung (320) mittels unterschiedlicher Absenkungen signalisiert werden.

10. Verfahren (300) nach einem der vorangehenden Ansprüche, wobei der erste Partner (105, 110) den Bodenroboter (105) umfasst; und die Anforderung (325) eines von einem Entleeren eines Staubbehälters, einem Reinigen eines Wischelements (215) und einem Auffüllen eines Flüssigkeitsbehälters betrifft.

11. Verfahren (300) nach einem der Ansprüche 1 bis 9, wobei der erste Partner (105, 110) die Basisstation (110) umfasst; und die Anforderung (325) eine Weiterleitung einer Nachricht an eine externe Stelle (280) umfasst.

12. Verfahren (300) nach Anspruch 11, wobei die Nachricht eines von einer Anforderung (325) zum Füllen oder Leeren eines Flüssigkeitsbehälters (260), einer Anforderung zum Wechseln eines Staubbeutels (265) oder einem Signalisieren eines Fehlers umfasst.

13. Bodenroboter (105), umfassend einen elektrischen Energiespeicher (120); zwei elektrische Kontakte (115) zur Verbindung mit einer Basisstation (110); eine Einrichtung (125) zur Bestimmung eines über die Kontakte (115) fließenden elektrischen Stroms; eine Einrichtung (130) zur Steuerung des über die Kontakte (115) (115) in den elektrischen Energiespeicher (120) fließenden Stroms; und eine Verarbeitungseinrichtung (145); wobei die Verarbeitungseinrichtung (145) dazu eingerichtet ist:
- eine Kommunikation mit der Basisstation (110) mittels vorübergehendem Absenken eines über die Kontakte (115) fließenden Stroms anzufragen;
- eine Bestätigung der Kommunikation auf der Basis einer vorübergehenden Absenkung des über die Kontakte (115) fließenden Stroms zu erfassen; und
- eine vorbestimmte Funktion der Basisstation (110) mittels Modulieren des Gleichstroms nach einem zugeordneten Muster anzufordern.

14. Bodenroboter (105), umfassend einen elektrischen Energiespeicher (120); zwei elektrische Kontakte (115) zur Verbindung mit einer Basisstation (110); eine Einrichtung (125) zur Bestimmung eines über die Kontakte (115) fließenden elektrischen Stroms; eine Einrichtung (130) zur Steuerung des über die Kontakte (115) zu in den elektrischen Energiespeicher (120) fließenden Stroms; und eine Verarbeitungseinrichtung (145); wobei die Verarbeitungseinrichtung (145) dazu eingerichtet ist:
- eine Anfrage zur Kommunikation auf der Basis eines vorübergehenden Absenkens eines über die Kontakte (115) fließenden Stroms zu erfassen;
- die Kommunikation mittels vorübergehendem Absenken des über die Kontakte (115) fließenden Stroms zu bestätigen;
- eine Anforderung für eine vorbestimmte Funktion auf der Basis einer Modulation des über die Kontakte (115) fließenden Gleichstroms nach einem vorbestimmten Muster zu erkennen; und
- die vorbestimmte Funktion zu steuern.

15. Basisstation (110), umfassend eine elektrische Stromquelle (150); zwei elektrische Kontakte (115) zur Verbindung mit einem Bodenroboter (105); eine Einrichtung (125) zur Bestimmung eines über die Kontakte (115) fließenden elektrischen Stroms; eine Einrichtung (130) zur Steuerung des aus der Stromquelle (150) über die Kontakte (115) fließenden Stroms; und eine Verarbeitungseinrichtung (145); wobei die Verarbeitungseinrichtung (145) dazu eingerichtet ist:
- eine Kommunikation mit dem Bodenroboter (105) mittels vorübergehendem Absenken eines über die Kontakte (115) fließenden Stroms anzufragen;
- eine Bestätigung der Kommunikation auf der Basis einer vorübergehenden Absenkung des über die Kontakte (115) fließenden Stroms zu erfassen; und
- eine vorbestimmte Funktion des Bodenroboters (105) mittels Modulieren des Gleichstroms nach einem zugeordneten Muster anzufordern.

16. Basisstation (110), umfassend eine elektrische Stromquelle (150); zwei elektrische Kontakte (115) zur Verbindung mit einem Bodenroboter (105); eine Einrichtung (125) zur Bestimmung eines über die Kontakte (115) fließenden elektrischen Stroms; eine Einrichtung (130) zur Steuerung des aus der Stromquelle in die Kontakte (115) fließenden Stroms; und eine Verarbeitungseinrichtung (145); wobei die Verarbeitungseinrichtung (145) dazu eingerichtet ist:
- eine Anfrage zur Kommunikation auf der Basis eines vorübergehenden Absenkens eines über die Kontakte (115) fließenden Stroms zu erfassen;
- die Kommunikation mittels vorübergehendem Absenken des über die Kontakte (115) fließenden Stroms zu bestätigen;
- eine Anforderung für eine vorbestimmte Funktion auf der Basis einer Modulation des über die Kontakte (115) fließenden Gleichstroms nach einem vorbestimmten Muster zu erkennen; und
- die vorbestimmte Funktion zu steuern.

17. Reinigungssystem (100), umfassend einen Bodenroboter (105) nach einem der Ansprüche 13 oder 14; und eine Basisstation (110) nach einem der Ansprüche 15 oder 16.
